(19) Europäisches Patentamt
European Patent Office
Office européen des brevets

(11) **EP 3 983 759 B1**

(12) **FASCICULE DE BREVET EUROPEEN**

(45) Date de publication et mention
de la délivrance du brevet:
**26.07.2023 Bulletin 2023/30**

(21) Numéro de dépôt: **20731504.5**

(22) Date de dépôt: **15.06.2020**

(51) Classification Internationale des Brevets (IPC):
**G01C 25/00** *(2006.01)* **G01C 21/16** *(2006.01)*

(52) Classification Coopérative des Brevets (CPC):
**G01C 25/005; G01C 21/16**

(86) Numéro de dépôt international:
**PCT/EP2020/066436**

(87) Numéro de publication internationale:
**WO 2020/249812 (17.12.2020 Gazette 2020/51)**

(54) **PROCEDE DE SURVEILLANCE DES PERFORMANCES D'UNITES DE MESURE INERTIELLE**

VERFAHREN ZUR ÜBERWACHUNG DER LEISTUNG VON TRÄGHEITSMESSEINHEITEN

METHOD FOR MONITORING THE PERFORMANCE OF INERTIAL MEASUREMENT UNITS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.06.2019 FR 1906413**

(43) Date de publication de la demande:
**20.04.2022 Bulletin 2022/16**

(73) Titulaire: **Safran Electronics & Defense
75015 Paris (FR)**

(72) Inventeurs:
• **ELIE, Philippe**
**77550 Moissy-Cramayel (FR)**
• **BRUNSTEIN, Etienne**
**77550 Moissy-Cramayel (FR)**
• **DELHAYE, Fabrice**
**77550 Moissy-Cramayel (FR)**

(74) Mandataire: **Lavialle, Bruno François Stéphane et al
Cabinet Boettcher
5 rue de Vienne
75008 Paris (FR)**

(56) Documents cités:
**WO-A1-2019/219626 FR-A1- 3 000 219**

• **SHOULTS G A ET AL: "AUTOMATIC SENSOR AND BORESIGHT ALIGNMENT USING ACCELEROMETERS", PROCEEDINGS OF THE NATIONAL AEROSPACE AND ELECTRONICS CONFERENCE. (NAECON). DAYTON, MAY 21 - 25, 1990; [PROCEEDINGS OF THE NATIONAL AEROSPACE AND ELECTRONICS CONFERENCE. (NAECON)], NEW YORK, IEEE, US, vol. 1 OF 03, 21 mai 1990 (1990-05-21), pages 395-399, XP000302014,**

## Description

La présente invention concerne le domaine de la mesure inertielle de position et/ou d'attitude.

Etat de la technique

Une centrale inertielle (ou INS de l'anglais « inertial navigation system ») incorpore habituellement une unité de mesure inertielle (UMI ou IMU de l'anglais « inertial measurement unit ») qui comprend trois capteurs accélérométriques disposés selon les axes d'un repère de mesure accélérométrique et trois capteurs angulaires, gyroscopes ou gyromètres, pour mesurer des mouvements angulaires du repère de mesure accélérométrique par rapport à une orientation de référence du repère de mesure. Chaque capteur accélérométrique comprend une masse d'épreuve (ou « proof mass ») soumise à la gravité et aux accélérations de l'objet dont est solidaire la centrale inertielle (par exemple un véhicule). Dans le repère de mesure accélérométrique, les accéléromètres mesurent une grandeur nommée force spécifique (« specific force » ou « g-force » en anglais) et déterminent les trois composantes d'un vecteur de force spécifique. La force spécifique est égale à la somme des forces non-inertielles auxquelles le corps inertiel est soumis, divisée par la masse du corps inertiel. La force spécifique a donc la dimension d'une accélération et est d'ailleurs également nommée « proper accélération » dans la littérature anglo-saxonne. Dans un système de navigation inertielle, les signaux des capteurs de l'unité de mesure inertielle sont exploités par un circuit électronique de traitement mettant en oeuvre un algorithme de navigation inertielle qui détermine à partir de ceux-ci une position dans un repère géographique local.

Les concepteurs de centrales inertielles ont besoin de surveiller la dérive de performance des capteurs inertiels du système de navigation inertielle dans le but de détecter une performance non conforme aux spécifications de l'unité de mesure inertielle. En outre, les concepteurs ont besoin d'assurer une relativement grande intégrité des systèmes de navigation inertielle et prévoient à cette fin une redondance des unités de mesure inertielle.

Lorsque le système de navigation comprend deux unités de mesure inertielle, il est connu de calculer deux navigations à partir des signaux des deux unités de mesure inertielle et de comparer les sorties des navigations inertielles dans le repère géographique local pour surveiller les dérives des unités de mesure inertielle et améliorer l'intégrité du système. Cependant, la navigation inertielle dans le repère d'exploitation géographique local est soumise aux perturbations provenant de l'excitation des chaînes de Schuler Nord et Ouest ainsi qu'à des erreurs de type oscillation à période de 24 heures qui sont induites par les erreurs gyroscopiques. Ces perturbations engendrent une latence dans la détection de la dérive. De ce fait, la surveillance des dérives lentes est difficile à observer. Alternativement, si les deux unités de mesure inertielle sont fixées à une même structure rigide, il est possible de comparer les sorties des capteurs. Cependant, avec cette méthode, on préjuge que la structure sur laquelle sont fixés les capteurs est infiniment rigide de sorte que les unités de mesure inertielle sont soumises aux mêmes sollicitations externes.

Des procédés d'alignement ou d'harmonisation d'unités de mesure inertielle entre elles sont connus des documents FR-A-3000219, WO-A-2019/219626 et Shoults et al, « Automatic Sensor and Boresight Alignment using Accelerometers », Proceedings of the National Aerospace Electronics Conférence (NAECON) Dayton, 21 au 25 mai 1990, IEEE vol 1/3, 21 mai 1990, pages 395-399.

Objet de l'invention

Un but de l'invention est de fournir un moyen simple et fiable pour détecter les pannes, notamment les pannes lentes, des unités de mesure inertielle sans devoir recourir au calcul d'une navigation.

Résumé de l'invention

A cet effet, on prévoit, selon l'invention, un procédé de surveillance conforme à la revendication 1.

La projection des vecteurs de force spécifique dans le repère inertiel permet de s'affranchir des effets des chaînes de Schuler et des oscillations à période de 24 heures, ceux-ci n'ayant pas d'effet sur la mesure des forces spécifiques. La projection des vecteurs de force spécifique dans un repère inertiel est rendue possible par l'exploitation des données gyrométriques. Le traitement des écarts des vecteurs de force spécifique des deux unités de mesure inertielle, intégrés ou non, permet de caractériser les écarts, dans le repère inertiel, des erreurs des capteurs gyrométriques et accélérométriques des deux unités de mesure inertielle. L'exploitation de cet écart dans le repère inertiel permet de détecter des variations de performances sur les couples de gyromètres et d'accéléromètres des unités de mesure inertielle. En particulier, l'écart des forces spécifiques peut être exploité pour identifier, d'une part, les termes aléatoires que l'on peut attribuer séparément à des erreurs accélérométriques ou gyrométriques et, d'autre part, les termes continus que l'on peut attribuer séparément à la résiduelle de l'alignement ou de la compensation des bras de leviers. L'avantage de l'invention est qu'elle permet d'estimer les erreurs relatives des capteurs avec une fonction de transfert simple, sans passer par les algorithmes de localisation habituels qui rendent l'analyse plus difficile en complexifiant la fonction de transfert du fait des erreurs des capteurs et des erreurs de localisation (résultant notamment de l'effet des oscillations de Schuler, et des oscillations à période de 24 heures, de l'alignement initial...).

L'invention concerne également un système de navigation agencé pour mettre en oeuvre ce procédé.

D'autres caractéristiques et avantages de l'invention ressortiront à la lecture de la description qui suit de modes de réalisation particuliers non limitatifs de l'invention.

Brève description des figures

Il sera fait référence aux dessins annexés, parmi lesquels :

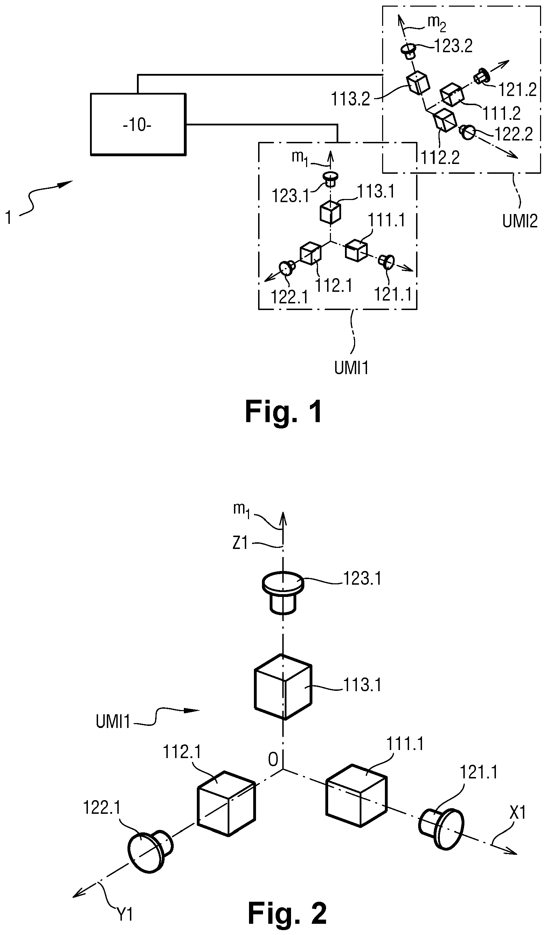

La figure 1 est une vue schématique en plan d'un système de navigation mettant en oeuvre le procédé de l'invention ;
La figure 2 est une vue schématique d'une centrale inertielle de ce système.

Description détaillée de l'invention

En référence aux figures, l'invention concerne un système de navigation 1 pour véhicule. Le véhicule est tout type de véhicule, aérien, nautique ou terrestre.

Le système de navigation 1 comprend ici un circuit électronique de traitement 10 relié à deux unités de mesure inertielle UMI1, UMI2.

L'unité de mesure inertielle UMI1 comprend trois accéléromètres 111.1, 112.1, 113.1 disposés selon les axes X1, Y1, Z1 d'un repère de mesure accélérométrique $m_1$ d'origine O1. L'unité de mesure inertielle UMI1 comprend trois capteurs angulaires 121.1, 122.1, 123.1 qui sont montés selon les axes X1, Y1, Z1 pour détecter les rotations du repère de mesure accélérométrique $m_1$ par rapport à un repère inertiel.

L'unité de mesure inertielle UMI2 comprend trois accéléromètres 111.2, 112.2, 113.2 disposés selon les axes X2, Y2, Z2 d'un repère de mesure accélérométrique $m_2$ d'origine O2. Trois capteurs angulaires 121.2, 122.2, 123.2 sont montés selon les axes X2, Y2, Z2 pour détecter les rotations du repère de mesure accélérométrique $m_2$ par rapport à un repère inertiel.

Les unités de mesure inertielle UMI1, UMI2 sont fixées par un montage de type strapdown sur des supports non nécessairement rigides embarqués dans un véhicule porteur avec une méconnaissance de l'écart angulaire entre les deux repères $m_1$, $m_2$. Les unités de mesure inertielle UMI1, UMI2 sont ainsi agencées pour mesurer la même force spécifique sous la forme d'un vecteur de force spécifique. Les unités de mesure inertielle UMI1, UMI2 sont également agencées pour permettre de déterminer à partir des mesures gyrométriques un vecteur rotation instantanée et les rotations des repères de mesure accélérométrique $m_1$, $m_2$ par rapport aux repères inertiels $[i_1]$, $[i_2]$. On notera que, dans le présent mode de réalisation, les deux unités de mesure inertielle UMI1, UMI2 sont positionnées de préférence au voisinage l'une de l'autre, c'est-à-dire suffisamment proches l'une de l'autre, de manière à avoir entre elles un bras de levier négligeable. Le circuit électronique de commande 10 comprend ici un processeur et une mémoire stockant des programmes exécutés par le processeur. Ces programmes comportent des instructions agencées pour mettre en oeuvre d'une part un procédé de navigation et d'autre part un procédé de surveillance des unités de mesure inertielle UMI1, UMI2. Le procédé de navigation (ou localisation) peut être mis en oeuvre par une centrale de navigation inertielle pure ou une centrale de cap et d'attitude (ou AHRS, centrale qui élabore par calcul des informations de cap et d'attitude) ou encore un système de navigation hybridée, par exemple inertielle/GPS. Le procédé de navigation qui est mis en oeuvre est connu en lui-même et ne sera pas plus décrit ici étant indépendant du procédé de surveillance faisant l'objet de l'invention.

Conformément au procédé de surveillance de l'invention, le circuit électronique de traitement 10 exécute les étapes de :

- projeter les vecteurs de force spécifique déterminés par chacune des unités de mesure inertielles dans un repère inertiel en utilisant les mesures gyrométriques ;
- comparer l'un à l'autre les deux vecteurs de force spécifique projetés dans ledit repère pour déterminer un écart entre eux ;
- surveiller une évolution de cet écart dans le temps.

La comparaison des vecteurs force spécifique est ici réalisée en comparant deux à deux les sorties des accéléromètres des deux unités de mesure inertielle UMI1, UMI2 après projection de ces sorties dans le repère inertiel associé à chaque unité de mesure inertielle UMI1, UMI2.

Le procédé de surveillance permet de remonter à des écarts d'erreurs de mesures inertielles fournies par les accéléromètres et gyromètres, à travers l'observation des écarts entre les forces spécifiques projetées dans le repère inertiel grâce aux mesures gyrométriques, sans la réalisation d'une navigation inertielle.

Le traitement des mesures des unités de mesure inertielle va maintenant être détaillé. Dans la suite de la description, on utilisera les notations suivantes :

$[m_1]$ : repère de mesure de l'UMI1

$[m_2]$ : repère de mesure de l'UMI2

$[i_1]$ : repère inertiel stabilisé en intégrant les mesures gyros de l'UMI1

$[i_2]$ : repère inertiel stabilisé en intégrant les mesures gyros de l'UMI2

$[i]$ : repère inertiel nominal (avec l'axe Z suivant l'axe de rotation terrestre)

$[g]$ : repère géographique local (convention NWD)

$\psi$ : vecteur d'erreur d'attitude dans $[i]$ (intégrale de 0 à t des 3 dérives gyrométriques projetées dans le repère inertiel nominal $[i]$)

**f**: vecteur force spécifique (mesures des accéléromètres), aussi noté fs

$C_g$ : vecteur pesanteur dans le repère géographique local $[g]$ avec les composantes (0, 0, g)'

$\gamma_g$ : vecteur accélération par rapport à la terre dans $[g]$

$\delta A_1$ : vecteur erreur de mesure des accéléromètres de l'UMI1

$\delta A_2$ : vecteur erreur de mesure des accéléromètres de l'UMI2

$\hat{T}_{im}$ : matrice de passage de m vers i obtenue en intégrant les mesures gyrométriques (via un quaternion par exemple)

$\hat{T}_{i_1 m_1}$ : matrice de passage calculée, de $m_1$ vers $i_1$

$\hat{T}_{i_2 m_2}$ : matrice de passage calculée, de $m_2$ vers $i_2$

$D_m$: vecteur dérive gyrométrique d'une UMI

**I**: matrice identité

**X** : vecteur d'état

**Y** : vecteur observation

$\hat{V}$ : estimée ou mesure de la grandeur **V**

$$A(X) = \begin{bmatrix} 0 & -z & y \\ z & 0 & -x \\ -y & x & 0 \end{bmatrix}$$ : matrice antisymétrique de **X**

La projection des forces spécifiques (fs) de chaque unité de mesure inertielle UMI1, UMI2 dans le repère inertiel $i_1$, $i_2$ élaboré par les unités de mesures inertielles UMI1, UMI2 à partir de leurs mesures gyrométriques respectives s'écrit sous la forme :

$$\hat{f}_{i_1} = \hat{T}_{i_1 m_1} . \hat{f}_{m_1}$$

$$\hat{f}_{i_2} = \hat{T}_{i_2 m_2} . \hat{f}_{m_2}$$

La matrice de passage $\hat{T}_{i_1 m_1}$ s'obtient par exemple par intégration d'un quaternion (le même calcul est réalisé pour l'UMI2), sur la base de l'équation différentielle suivante :

$$\dot{\hat{T}}_{im} = \hat{T}_{im} . A\left(\Omega_m^{m/i}\right)$$

Dans cette équation, $\Omega_m^{m/i}$ correspond aux 3 mesures d'un trièdre de gyromètres (pour chaque unité de mesure inertielle UMI1 et UMI2).

Au temps t = 0, on a $\hat{T}_{i_1 m_1}$ = **I** et $\hat{T}_{i_2 m_2}$ = **I**, d'où à t = 0 :

$$T_{i_1 i_2} = T_{i_1 m_1} . T_{m_1 m_2} . T_{m_2 i_2} = I . T_{m_1 m_2} . I = T_{m_1 m_2}$$

Ainsi, au temps t = 0, les repères inertiels $[i_1]$ et $[i_2]$ sont très voisins car $[m_1]$ est supposé proche de $[m_2]$ puisque les unités de mesure inertielle UMI1 et UMI2 sont supposées montées parallèles à quelques degrés près, ou un des deux repères est préalablement compensé d'un angle d'harmonisation connu à quelques degrés près.

On peut ensuite écrire pour l'unité de mesure inertielle UMI1 (en négligeant l'accélération de Coriolis, commune aux deux mesures) :

$$\hat{f}_{m_1} = T_{m_1 g}(\gamma_g - G_g) + \delta A_1$$

On appliquera la même formule pour l'unité de mesure inertielle UMI2 (aux indices près) et on pourra calculer l'écart entre les deux forces spécifiques projetées chacune dans le repère inertiel $[i_1]$, $[i_2]$ de l'unité de mesure inertielle correspondante UMI1, UMI2 :

$$\Delta \hat{f}_i = \hat{f}_{i_2} - \hat{f}_{i_1} = \hat{T}_{i_2 m_2} \cdot \left[ T_{m_2 g}(\gamma_g - G_g) + \delta A_2 \right] - \hat{T}_{i_1 m_1} \cdot \left[ T_{m_1 g}(\gamma_g - G_g) + \delta A_1 \right]$$

On pose $\hat{T}_{im} = [I + A(\psi)] \cdot T_{im}$ et on notera que $I + A(\psi)$ représente une matrice de micro-rotation d'angle $\psi$ .

Le vecteur d'erreur $\psi$ correspond à l'intégrale du vecteur dérivé projeté dans le repère inertiel :

$$\psi(t) = \int_0^t T_{im}(\tau) \cdot D_m(\tau) \cdot d\tau$$

D'où :

$$\Delta \hat{f}_i = \left[ I + A(\psi_2) \right] T_{i_2 m_2} \left[ T_{m_2 g}(\gamma_g - G_g) + \delta A_2 \right] \\ - \left[ I + A(\psi_1) \right] T_{i_1 m_1} \left[ T_{m_1 g}(\gamma_g - G_g) + \delta A_1 \right]$$

On pose $T_{i_2 i_1} = I + A(\psi_0)$ qui représente une matrice de micro-rotation pour passer du repère inertiel $[i_1]$ au repère inertiel $[i_2]$. Cette matrice est constante.

En développant la formule précédente et en ne gardant que les erreurs au 1er ordre, on obtient :

$$\Delta \hat{f}_i \approx T_{i_2 m_2} \delta A_2 - T_{i_1 m_1} \delta A_1 + T_{i_2 g}(\gamma_g - G_g) - T_{i_1 g}(\gamma_g - G_g) + A(\psi_2) T_{i_2 g}(\gamma_g - G_g) \\ - A(\psi_1) T_{i_1 g}(\gamma_g - G_g)$$

$$\Delta \hat{f}_i \approx \left( I + A(\psi_0) \right) \cdot T_{i_1 m_1} \cdot \delta A_1 - T_{i_1 m_1} \cdot \delta A_1 + \left( I + A(\psi_0) \right) T_{i_1 g}(\gamma_g - G_g) \\ - T_{i_1 g}(\gamma_g - G_g) \\ + A(\psi_2) \cdot \left( I + A(\psi_0) \right) T_{i_1 g}(\gamma_g - G_g) - A(\psi_1) T_{i_1 g}(\gamma_g - G_g)$$

$$\Delta \hat{f}_i \approx T_{i_1 m_1} \cdot T_{m_1 m_2} \delta A_2 - T_{i_1 m_1} \delta A_1 + A\left( \psi_0 + \psi_2 - \psi_1 \right) T_{i_1 g}(\gamma_g - G_g)$$

On a vu que que $T_{m_1 m_2}$ est proche de $I$, d'où en utilisant les mesures de l'unité de mesure UMI1 :

$$\Delta \hat{f}_i \approx T_{i_1 m_1} \cdot (\delta A_2 - \delta A_1) + A\left( \psi_0 + \psi_2 - \psi_1 \right) \cdot T_{i_1 g} \cdot (\gamma_g - G_g)$$

On retrouve dans cette équation d'erreur, la contribution accélérométrique et la contribution gyrométrique à l'erreur globale.

De la même manière, on trouve en utilisant les mesures de l'unité de mesure UMI 2 :

$$\Delta \hat{f}_i \approx T_{i_2 m_2} \cdot (\delta A_2 - \delta A_1) + A\left( -\psi_0 + \psi_2 - \psi_1 \right) \cdot T_{i_2 g} \cdot (\gamma_g - G_g)$$

On retrouve également dans cette équation d'erreur, la contribution accélérométrique et la contribution gyrométrique à l'erreur globale.

Pour une implémentation en temps réel dans un équipement inertiel, on utilise les mesures disponibles, à savoir :

$$\Delta \hat{f}_i \approx \hat{T}_{i_1 m_1} \cdot (\delta A_2 - \delta A_1) + A(\psi_0 + \psi_2 - \psi_1) \cdot \hat{f}_{i_1}$$

En posant $\Delta A = \delta A_2 - \delta A_1$ et $\Delta \psi = \psi_0 + \psi_2 - \psi_1$ dans la formule précédente on obtient :

$$\Delta \hat{f}_i \approx \hat{T}_{i_1 m_1} \Delta A + A(\Delta \psi) \cdot \hat{f}_{i_1}$$

Sachant que : $A(X)Y = -A(Y)X$, on a :

$$\Delta \hat{f}_i \approx \hat{T}_{i_1 m_1} \Delta \boldsymbol{A} - A(\hat{f}_{i_1}) \cdot \Delta \psi$$

ou sous une forme différente : $\Delta \hat{f}_i \approx \hat{T}_{i_2 m_2} \Delta \boldsymbol{A} - A(\hat{f}_{i_2}) \cdot \Delta \psi$ avec une définition différente pour $\Delta \psi$.

Les termes $\Delta \boldsymbol{A}$ et $\Delta \psi$. dans les deux dernières équations sont les inconnues, toutes les autres grandeurs sont connues en temps réel. Ceci peut s'écrire sous forme matricielle (dans laquelle j correspond à l'indice 1 ou 2 de l'unité de mesure inertielle dont les mesures ont été utilisées) :

$$Y = \left[\Delta \hat{f}_i\right] = \left[\hat{T}_{i_j m_j} \quad -A\left(\hat{f}_{i_j}\right)\right] \cdot \begin{bmatrix} \Delta A \\ \Delta \psi \end{bmatrix} = H \cdot X$$

Cette équation matricielle, dite équation de mesure ($Y = H \cdot X$), peut être traitée par un estimateur de type moindres carrés ou un filtre de Kalman, $Y$ étant le vecteur de mesure, $X$ le vecteur d'état et $H$ la matrice d'observation.

Cette équation matricielle peut aussi s'écrire sous la forme $Y = H \cdot X + V$, où $V$ est un vecteur de bruit blanc pouvant modéliser le bruit sur les mesures d'accélération.

Afin de réduire l'effet du bruit, il est aussi possible d'utiliser l'intégrale en fonction du temps de cette équation de mesure. Cela facilite aussi la compensation éventuelle des bras de levier si les deux unités de mesure inertielle UMI1 et UMI2 sont éloignées de plus de quelques mètres. En effet, dans un tel cas, il est préférable de ramener les deux forces spécifiques au même point de référence, en compensant les bras de levier existant entre les unités de mesure inertielle, afin de rendre les écarts insensibles aux rotations du porteur. Cette compensation du bras de levier s'écrit sous la forme :

$$\int_{t1}^{t2} \Delta \hat{f}_i \cdot dt \ compensé = \int_{t1}^{t2} (\hat{f}_{i_2} - \hat{f}_{i_1}) dt - \hat{T}_{i_1 m_1} (\vec{R} \wedge \vec{\Omega}_{m_1/i})$$

$\vec{R}$ étant le vecteur bras de levier entre les unités de mesure inertielle UMI1 et UMI2 (distance entre les deux UMI exprimée dans $[m_1]$) et $\vec{\Omega}_{m1/i}$ le vecteur vitesse de rotation instantanée de l'UMI 1 par rapport au repère inertiel [i] pouvant être fourni par les mesures gyrométriques de l'une des deux unités de mesure inertielle au choix.

L'équation de mesure devient alors :

$$Y = \int_{t1}^{t2} \Delta \hat{f}_i \cdot dt \ compensé = \left[\int_{t1}^{t2} H \, dt\right] \cdot X$$

La fenêtre d'intégration (t2 - t1) peut être ajustée en fonction du seuil de détection souhaité.

Si un filtre de Kalman est utilisé pour estimer le vecteur d'état X, il est possible d'affecter un modèle statistique dit « conforme » aux erreurs accélérométriques et gyrométriques (modèle markovien), dans ce cas la comparaison des estimées aux écarts types fournis par le filtre permet d'identifier toute non-conformité d'un capteur.

Pour cela, il faut augmenter la taille du vecteur d'état et y ajouter l'équation différentielle suivante, donnant le lien entre $\Delta \psi$ et les dérives : $\dot{\Delta \psi} = T_{im} \cdot \Delta D_m$ et $\Delta \psi (t = 0) = \psi_0$

Ceci donne les nouvelles équations suivantes :

- Equation de mesure :

$$Y = \left[ \int_{t1}^{t2} \Delta \hat{f}_i . dt\ compensé \right] = H \cdot X = \left[ \int_{t1}^{t2} \hat{T}_{i_1 m_1}\, dt \quad - \int_{t1}^{t2} A(\hat{f}_{i_1}) dt \quad 0 \right] \cdot \begin{bmatrix} \Delta A \\ \Delta \psi \\ \Delta D_m \end{bmatrix}$$

- Equation d'évolution de l'état :

$$\dot{X} = F \cdot X + U \quad \text{avec} \quad : F = \begin{bmatrix} F_A & 0 & 0 \\ 0 & 0 & \hat{T}_{i_1 m} \\ 0 & 0 & F_D \end{bmatrix} \quad \text{et} \quad U = \begin{bmatrix} U_A \\ U_\psi \\ U_D \end{bmatrix}$$

Les sous-matrices $F_A$ et $F_D$ permettent de définir les modèles markoviens pour les erreurs capteurs $\Delta A$ et $\Delta D_m$, en lien avec les bruits d'état $U_A$ et $U_D$. Le bruit blanc $U_\psi$ permet de définir un bruit blanc de dérive, communément appelé *Angular Random Walk* ou marche au hasard.

Ainsi, le procédé de surveillance peut révéler un comportement d'une des deux unités de mesure inertielle qui serait non conforme au modèle d'évolution temporelle attendue sur les capteurs (classiquement un modèle de type markovien). Après avoir détecté ce comportement, le procédé peut être agencé pour émettre une alerte afin d'avertir l'utilisateur. Cependant avec seulement deux unités de mesure inertielle sous surveillance, le procédé ne permet pas d'isoler (ou identifier) celle des deux unités de mesure inertielle UMI dont le comportement n'est pas conforme. En revanche, on notera que, mis en oeuvre avec trois unités de mesure inertielle, le procédé permettrait d'identifier l'unité de mesure inertielle défaillante. Il suffirait pour cela d'appliquer le procédé sur les trois unités de mesure inertielle prises deux à deux (avec des unités de mesure inertielles UMI1, UMI2, UMI3, un écart détecté entre les vecteurs de force spécifique des unités de mesure inertielle UMI1 et UMI2 et entre les vecteurs de force spécifique des unités de mesure inertielle UMI2 et UMI3 conduit à identifier une non-conformité sur l'unité de mesure inertielle UMI2 commune aux deux comparaisons).

On notera à propos de l'observabilité de $\Delta \psi$ :

- dans l'équation de mesure simplifiée $\Delta \hat{f}_i = -A(\hat{f}_{i_1}).\Delta \psi$, le produit $A(\hat{f}_{i_1}).\Delta \psi$ correspond au produit vectoriel entre les vecteurs $\hat{f}_{i_1}$ et $\Delta \psi$ ;
- si les deux vecteurs sont colinéaires, le produit vectoriel est nul. Il n'est donc possible d'observer que la projection de $\Delta \psi$ dans un plan perpendiculaire à .

Ainsi, en se replaçant dans le repère géographique local, sachant que la force spécifique est majoritairement due à la pesanteur, il n'est possible d'observer que les effets des dérives qui sont dans le plan horizontal. Cela est vrai sur une durée d'observation courte devant la période de rotation terrestre (24 h).

Bien entendu, l'invention n'est pas limitée aux modes de réalisation décrits mais englobe toute variante entrant dans le champ de l'invention telle que définie par les revendications.

En particulier, les deux unités de mesure inertielle peuvent être montées dans un même appareil, comme dans le mode de réalisation décrit, ou dans des appareils distincts.

Les accéléromètres et/ou les gyromètres peuvent être de tout type et comprendre des gyroscopes à résonateur axisymétrique vibrant, par exemple de type HRG, ou des microsystèmes électromécaniques (ou MEMS de l'anglais « Microelectromechanical Systems »).

L'invention est utilisable sans compensation du bras de levier si les unités de mesure inertielle sont suffisamment proches l'une de l'autre. A titre d'exemple, pour un avion civil, on n'effectuera pas de compensation lorsque les unités de mesure inertielle sont à moins de trois mètres l'une de l'autre. Cette valeur dépendra cependant du niveau de panne admissible et de la sensibilité des unités de mesure inertielle.

En variante, le procédé comprend l'étape, lors d'une phase d'exploitation au cours de laquelle les unités de mesure inertielle sont considérées comme fonctionnant nominalement, de déterminer un écart d'alignement et un résiduel de bras de levier à partir de l'écart entre les vecteurs de force spécifique projetés dans le repère inertiel. Ainsi, dans la formule :

$$\int_{t1}^{t2} \Delta \hat{f}_i . dt \ compensé = \int_{t1}^{t2} (\hat{f}_{i_2} - \hat{f}_{i_1}) dt - \hat{T}_{i_1 m_1}(\vec{R} \wedge \vec{\Omega}_{m_1/i})$$

le dernier membre de l'équation -$\hat{T}_{i_1 m_1}(\vec{R} \wedge \vec{\Omega}_{m_1/i})$ peut être intégré à $H \cdot X$ ce qui permet de rajouter les composantes du bras de levier dans le vecteur d'état $X$, permettant ainsi son estimation par le filtre de Kalman. Il peut s'agir du bras de levier absolu, ou du résiduel de bras de levier si celui-ci est partiellement compensé car étant non parfaitement connu.

L'invention s'applique à tout système utilisant des unités de mesure inertielle. L'invention s'applique ainsi au cas d'une centrale de cap et de verticale, aussi appelée AHRS (Attitude and Heading Reference System), que l'on peut décomposer en une unité de mesure inertielle et en une partie réalisant les calculs de cap et d'attitude.

**Revendications**

1. Procédé de surveillance au moins d'une première unité de mesure inertielle (UMI1) et d'une deuxième unité de mesure inertielle (UMI2) qui sont montées sur un même porteur, la première unité de mesure inertielle (UMI1) et la deuxième unité de mesure inertielle (UMI2) étant reliées à un même circuit électronique de traitement (10) et étant agencées pour déterminer un vecteur de force spécifique dans un repère de mesure accélérométrique (m1, m2) et des données de rotation du repère de mesure accélérométrique par rapport à un repère inertiel ; **caractérisé en ce que** les unités de mesure sont montées pour être supposées parallèles l'une à l'autre à quelques degrés près ou un des deux repères est préalablement compensé d'un angle d'harmonisation connu a quelgues degés près, et **en ce que** le circuit électronique de trailtement (10) execute les étapes de:

   - projeter les vecteurs de force spécifique dans le repère inertiel en utilisant les données de rotation, le repère inertiel correspondant au repère de mesure en un temps t=0 ;
   - comparer l'un à l'autre les deux vecteurs de force spécifique projetés dans ledit repère pour déterminer un écart entre eux ;
   - surveiller une évolution de cet écart dans le temps.

2. Procédé selon la revendication 1, dans lequel la première unité de mesure inertielle (UMI1) et la deuxième unité de mesure inertielle (UMI2) comprennent chacune trois accéléromètres (111.1, 112.1, 113.1; 111.2, 112.2, 113.2) disposés chacun selon un axe (X1, Y1, Z1; X2, Y2, Z2) d'un repère de mesure accélérométrique (m1, m2) et trois gyromètres (121.1, 122.1, 123.1; 121.2, 122.2, 123.2) disposés chacun pour mesurer l'orientation du repère de mesure accélérométrique (m1, m2) par rapport au repère inertiel, la comparaison des vecteurs force spécifique est réalisée en comparant deux à deux les sorties des accéléromètres (111.1, 112.1, 113.1; 111.2, 112.2, 113.2) des deux unités de mesure inertielle (UMI1, UMI2) après projection de ces sorties dans le repère inertiel.

3. Procédé selon la revendication 1 ou la revendication 2, dans lequel, les deux unités de mesure (UMI1, UMI2) étant écartées l'une de l'autre, le procédé comprend l'étape de compenser un bras de levier entre les deux unités de mesure (UMI1, UMI2).

4. Procédé selon la revendication 3, comprenant l'étape, lors d'une phase d'exploitation au cours de laquelle les unités de mesure inertielle (UMI1, UMI2) sont considérées comme fonctionnant nominalement, de déterminer un écart d'alignement et un résiduel de bras de levier à partir de l'écart entre les vecteurs de force spécifique projetés dans le repère inertiel.

5. Procédé selon l'une quelconque des revendications précédentes, comprenant l'étape de déduire de l'écart des erreurs des unités de mesure inertielle (UMI1, UMI2).

6. Procédé selon la revendication 5, comprenant l'étape de comparer les erreurs des unités de mesure inertielle (UMI1, UMI2) à un modèle d'évolution temporelle des erreurs des unités de mesure inertielle (UMI1, UMI2).

7. Système de navigation (1) pour véhicule, comprenant au moins une première unité de mesure inertielle (UMI1) et une deuxième unité de mesure inertielle (UMI2) reliées à une unité électronique de traitement (10) agencée pour mettre en oeuvre le procédé selon l'une quelconque des revendications précédentes.

## EP 3 983 759 B1

### Patentansprüche

1. Verfahren zur Überwachung mindestens einer ersten Trägheitsmesseinheit (UMI1) und einer zweiten Trägheitsmesseinheit (UMI2), die auf einem selben Träger montiert sind, wobei die erste Trägheitsmesseinheit (UMI1) und die zweite Trägheitsmesseinheit (UMI2) mit einer selben elektronischen Verarbeitungsschaltung (10) verbunden und ausgebildet sind, einen Vektor der spezifischen Kraft in einem Beschleunigungsmessbezugssystem (m1, m2) und Rotationsdaten des Beschleunigungsmessbezugssystems in Bezug auf ein Trägheitsbezugssystem zu bestimmen, **dadurch gekennzeichnet, dass** die Messeinheiten so montiert sind, dass sie bis auf wenige Grad als parallel zueinander angenommen werden oder eines der beiden Bezugssysteme zuvor um einen bis auf wenige Grad genau bekannten Harmonisierungswinkel kompensiert wird, und dass die elektronische Verarbeitungsschaltung (10) die Schritte ausführt:

   - Projizieren der Vektoren der spezifischen Kraft in das Trägheitsbezugssystem, indem die Rotationsdaten verwendet werden, wobei das Trägheitsbezugssystem dem Messbezugssystem zu einem Zeitpunkt t=0 entspricht;
   - Vergleichen der beiden Vektoren der spezifischen Kraft, die in das genannte Bezugssystem projiziert werden, miteinander, um eine Differenz zwischen diesen zu bestimmen;
   - Überwachen einer Entwicklung dieser Differenz über die Zeit.

2. Verfahren nach Anspruch 1, bei dem die erste Trägheitsmesseinheit (UMI1) und die zweite Trägheitsmesseinheit (UMI2) jeweils drei Beschleunigungsmesser (111.1, 112.1, 113.1; 111.2, 112.2, 113.2) umfassen, die jeweils entlang einer Achse (X1, Y1, Z1; X2, Y2, Z2) eines Beschleunigungsmessbezugssystems (m1, m2) angeordnet sind, sowie drei Gyrometer (121.1, 122.1, 123.1; 121.2, 122.2, 123.2), die jeweils angeordnet sind, um die Ausrichtung des Beschleunigungsmesssystems (m1, m2) in Bezug auf das Trägheitsbezugssystem zu messen, wobei der Vergleich der Vektoren der spezifischen Kraft dadurch erfolgt, dass die Ausgänge der Beschleunigungsmesser (111.1, 112.1, 113.1; 111.2, 112.2, 113.2) der beiden Trägheitsmesseinheiten (UMI1, UMI2) nach der Projektion dieser Ausgänge in das Trägheitsbezugssystem paarweise verglichen werden.

3. Verfahren nach Anspruch 1 oder Anspruch 2, bei dem unter Berücksichtigung, dass die beiden Messeinheiten (UMI1, UMI2) zueinander beabstandet sind, das Verfahren den Schritt des Kompensierens eines Hebelarms zwischen den beiden Messeinheiten (UMI1, UMI2) umfasst.

4. Verfahren nach Anspruch 3, umfassend, während einer Betriebsphase, während der die Trägheitsmesseinheiten (UMI1, UMI2) als nominal arbeitend angesehen werden, den Schritt des Bestimmens einer Fluchtdifferenz und eines Hebelarmrestwerts anhand der Differenz zwischen den Vektoren der spezifischen Kraft, die in das Trägheitsbezugssystem projiziert werden.

5. Verfahren nach einem der vorhergehenden Ansprüche, umfassend den Schritt des Herleitens von Fehlern der Trägheitsmesseinheiten (UMI1, UMI2) aus der Differenz.

6. Verfahren nach Anspruch 5, umfassend den Schritt des Vergleichens der Fehler der Trägheitsmesseinheiten (UMI1, UMI2) mit einem Modell für zeitliche Veränderungen der Fehler der Trägheitsmesseinheiten (UMI1, UMI2).

7. Navigationssystem (1) für ein Fahrzeug, umfassend mindestens eine erste Trägheitsmesseinheit (UMI1) und eine zweite Trägheitsmesseinheit (UMI2), die mit einer elektronischen Verarbeitungseinheit (10) verbunden sind, die ausgebildet ist, das Verfahren nach einem der vorhergehenden Ansprüche durchzuführen.


### Claims

1. A method of monitoring at least first and second inertial measurement units, the first inertial measurement unit and the second inertial measurement unit being connected to the same electronic processor circuit and being arranged to determine both a specific force vector in an accelerometer measurement reference frame and also rotation data concerning turning of the accelerometer measurement reference frame relative to an inertial reference frame; the method being **characterized in that** the electronic processor circuit performs the steps of:

   · projecting the specific force vectors into an inertial reference frame by using the rotation data;
   · comparing the two specific force vectors as projected into said reference frame with each other in order to

9

determine a difference between them; and
· monitoring variation in this difference over time.

2. A method according to claim 1, wherein each of the first and second inertial measurement units has three accelerometers, each arranged along a respective axis of the accelerometer reference frame, and three gyros, each arranged to measure the orientation of the accelerometer measurement reference frame relative to the inertial reference frame, and the specific force vectors are compared by comparing the outputs of the accelerometers of the two inertial measurement units in pairs after the outputs have been projected into the inertial reference frame.

3. A method according to claim 1 or claim 2, wherein the two measurement units are spaced apart from each other, and the method includes the step of compensating for a lever arm between the two measurement units.

4. A method according to claim 3, including, during a stage of operation in which the inertial measurement units are considered as operating nominally, the step of determining an alignment difference and a lever arm residual from the difference between the specific force vectors as projected into the inertial reference frame.

5. A method according to any preceding claim, including the step of deducing errors of the inertial measurement units from the difference.

6. A method according to claim 5, including the step of comparing the errors of the inertial measurement units with a model for variation over time of the errors of the inertial measurement units.

7. Vehicle navigation apparatus comprising at least first and second inertial measurement units connected to an electronic processor unit arranged to perform the method according to any preceding claim.

**Fig. 1**

**Fig. 2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3000219 A

- WO 2019219626 A

**Littérature non-brevet citée dans la description**

- Automatic Sensor and Boresight Alignment using Accelerometers. **SHOULTS et al.** Proceedings of the National Aerospace Electronics Conférence (NAECON) Dayton. IEEE, 21 Mai 1990, vol. 1/3, 395-399